# EUROPEAN PATENT SPECIFICATION

(11) **EP 2 640 790 B1**
(45) Date of publication and mention of the grant of the patent: **07.06.2023**
(21) Application number: 11808266.8
(22) Date of filing: 16.11.2011
(51) Int. Cl.: E04B 1/68, E04B 7/00, B60J 10/35, C09J 7/21, C09J 7/38

(54) **GAP SEALING TAPE**
SPALTDICHTUNGSBAND
RUBAN ISOLANT ADHÉSIF

(30) Priority: 16.11.2010 GB 201019343
(43) Date of publication of application: 25.09.2013
(73) Proprietor: Rogers, Paul, Bryansford, Newcastle Down BT33 0QD (GB); Ward, Edward, Castlewellan Down BT31 9BQ (GB)
(72) Inventor: Rogers, Paul, Bryansford, Newcastle Down BT33 0QD (GB); Ward, Edward, Castlewellan Down BT31 9BQ (GB)
(74) Representative: Murgitroyd & Company
(86) International application number: PCT/GB2011/052233
(87) International publication number: WO 2012/066326

(56) References cited:
- WO-A2-02/068556
- DE-A1- 2 034 800
- DE-A1-102008 038 473
- US-A- 4 245 630
- US-A1- 2004 241 387
- US-B1- 6 843 279
- DATABASE WPI Week 198518 Thomson Scientific, London, GB; AN 1985-108498 XP002674187, -& NL 8 303 106 A (RIGIPS BENELUX VOF) 1 April 1985 (1985-04-01)

## Description

### Field of the invention

The present invention relates to gap sealing insulating tapes.

### Background

Gap sealing tapes are used to fill and seal elongate voids or gaps in order to prevent draughts, water ingress or to prevent heat loss. Gap sealing tapes generally comprise an elongate strip of expandable material which is forced into the gap to be sealed or is placed along an edge of a structure or part which is to be placed in abutment with, or proximity to, another structure or part.

A known gap sealing tape comprises a foam strip having an adhesive layer on one side which enables it to be adhered to a surface. Such a foam strip has the disadvantage that the foam material wears or degrades over time and is susceptible to damage from shear forces acting upon its sides when the members to which it is adhered are being installed. Such wear, degradation and shear forces readily cause the foam material to break from the adhesive layer thereby detaching from the member to which it was previously adhered and causing the otherwise sealed gap to open.

WO02/068556A2, NL8303106A and US6843279B are also useful in understanding the background to the present invention.

It is therefore an object of the present invention to mitigate the disadvantages of the prior art and to provide a useful alternative thereto.

### Summary of the invention

In accordance with one aspect of the present invention, there is provided an adhesive gap sealing insulation tape for sealing the gaps between the edges of adjacent panels or structural elements, the tape comprising a backing having an adhesive layer on one surface and an elongate strip of foam material extending lengthwise along the adhesive layer, wherein the elongate strip of foam material extending lengthwise along the adhesive layer is provided along a central portion of said adhesive layer such that the portions of backing which extend widthwise beyond the edges of the elongate strip of foam material are foldable to provide foldable flaps which extend beyond a depth of the strip of foam material, and which are adapted to overlap and adhere to the respective sides of the same panel or structural element in use, and to protect the foam material from shear forces during installation; and wherein the elongate strip of foam material comprises a compressible and an expansible foam material able to expand a predetermined amount to provide a substantially airtight fit and an interference fit between the edges of said panels or structural elements when in juxtaposition.

In this way, the foam strip is securable against the edge of said panel or structural element and is sealed on all its sides.

Generally, the panels are insulating panels, however, use of the tape is not limited to use with insulating panels. Similarly the term 'structural element' is not intended to be limiting on any type of element, but encompasses any structure, such as, but limited to, walls, floors, boards, joists, ceilings, lintels, window frames etc.

Conveniently, the foldable portion or portions of backing may be formed having flutes or frills. Advantageously, the flutes or frills enable the adhesive strip to be applied to bent, curved or irregularly profiled members, the flutes or frills enabling the tape to conform to the shape of said members without the backing buckling.

Ideally, the flutes or frills are formed on the backing so that they stop short of the region where the foam strip is provided so that the foldable portion or portions of backing can be folded as intended in use.

Conveniently, the adhesive layer on the portions of the backing which extend widthwise beyond the edges of the elongate foam strip are provided with a peel-off strip or strips of protective material which protect the adhesive layer.

Conveniently, the foldable portion or portions of backing can be folded back upon itself or themselves to facilitate the tape being formed into a narrower roll. In this way, the packing dimensions of a roll of the tape in accordance with the invention are reduced.

Ideally, the width of a roll of tape in accordance with the invention is substantially the same width of the foam strip.

Ideally, the foam strip is provided with a suitable low-tack adhesive on its surface so that the tape can be adjustably placed into position along a panel or structural element to which it is to be affixed.

Ideally, the foam strip is provided with a chamfered edge on either or both sides. Conveniently, provision of the chamfered edge enables insulating panel members to which the foam is applied to be more easily installed, the resultant bevelled edge defined by the adhesive tape allowing said panels to slidably engage with other panels or structural members without snagging on initial edge-to-edge contact.

Conveniently, the foam strip may comprise any suitable cross-sectional or extrusion profile, such as, but not limited to, square, oblong or domed.

Preferably, the backing comprises a metal foil.

Alternatively, the backing may comprise a fabric, polymer, rubber or other suitable material.

Advantageously, the backing may comprise a breathable material.

Alternatively, the backing may comprise a gas impermeable material. Advantageously, the use of gas impermeable backing alleviates the loss of gas from insulating panel members formed from rigid phenolic, rigid urethane or extruded polystyrene.

The foam material comprises a visco elastic foam or other suitable expansible foam material, the term 'foam' encompassing any suitable spongy, soft, compressible or shock absorbent material.

Preferably, the foam material has shape memory properties. Advantageously, the memory properties enable the foam strip to form a pre-compressed state prior to application on the insulating panel or while the adhesive tape is rolled up, and will expand a predetermined amount once applied to said insulating panel

The provision of such an adhesive gap sealing tape provides an improved fit between adjacent insulating panels or other structural elements against which they abut, the foam being expansible to increase the width of the insulating panel or structural element and being compressible so that a snug, substantially airtight, fit between the edges of said panels or elements is achieved.

Advantageously, the provision of such an adhesive gap sealing tape enables irregularly shaped or cut insulating panels or irregular components to be fitted in mutual abutment or in abutment with straight or regularly shaped parts. Conveniently, this functionality enables said panels to be quickly installed using an interference fit thereby obviating the need to use fasteners or devices which penetrate said panels during fitting or use.

Conveniently, the provision of such an adhesive gap sealing tape having a foldable backing seals the otherwise exposed cut edges of an insulating panel to which it is applied.

The tape is an insulation tape.

In one embodiment, the tape is a protective cushioning tape for application to the edges or surfaces of items or members.

The invention will hereinafter be more particularly described with reference to the accompanying drawings which show, by way of example only, an embodiment of an adhesive gap sealing tape in accordance with the invention.

In the drawings:

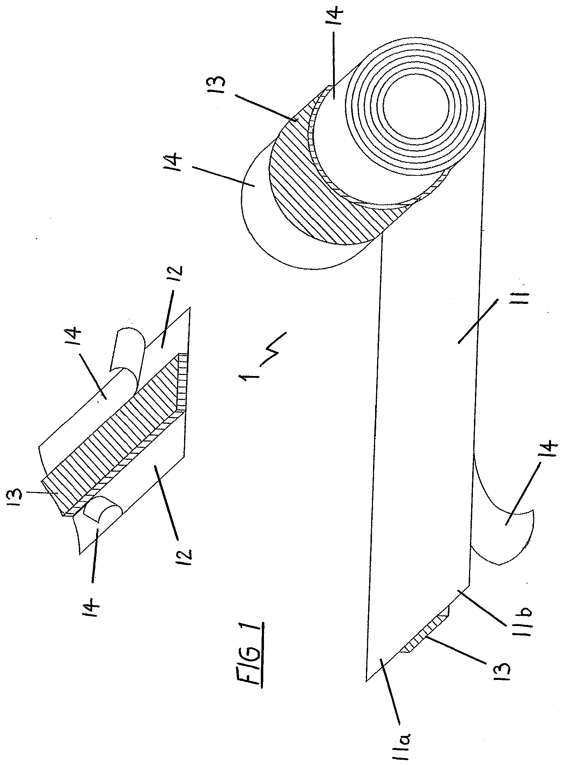

Figure 1 shows a schematic illustration of an embodiment of adhesive gap sealing tape in accordance with the invention;
Figure 2 is a perspective view of the tape of Figure 1 shown adhered to an exemplary insulation panel;
Figures 3a and 3b are schematic illustrations showing an arrangement of a foam strip in accordance with the invention;
Figure 4 is a schematic cross-sectional illustration of an embodiment of the adhesive gap sealing tape in accordance with the invention;
Figures 5a and 5b are a schematic illustration showing the foldable portions of backing moved between unfolded and folded configurations; and
Figure 6 is a schematic illustration showing a roll of adhesive gap sealing tape with the backing shown back upon themselves in accordance with the invention;

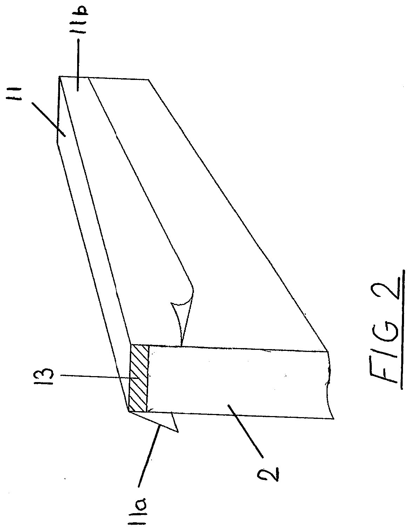

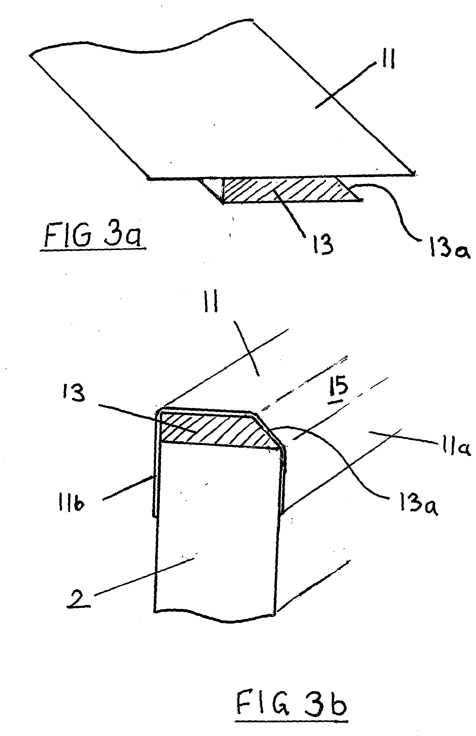

Referring to the figures, there is shown an adhesive tape 1 for sealing the air gaps between the edges of adjacent insulating panels or structural elements against which they abut, the tape comprising a backing 11 having an adhesive layer 12 on one surface and an elongate strip 13 of foam material extending lengthwise along a central portion of the adhesive layer. The portions 11a, 11b of backing which extend widthwise beyond the edges of the elongate strip of foam material are foldable so as to overlap and adhere to the respective sides of an insulating panel member 2 (Figures 2 and 3b) so that the foam strip is securable against the edge of said insulating panel member and is sealed on all its sides. Provision of the foldable backing portions 11a, 11b further ensures that the foam is protected from shear forces during the installation of the panels to which it is applied, such forces otherwise acting to peel the foam from the panels. Ideally the backing comprises a metal foil however other suitable materials may be used, for example a fabric or polymer strip material.

In Figures 3a and 3b the elongate strip 13 of foam material is shown having a chamfered edge 13a. Provision of the chamfered edge 13b enables insulating panel members to which the foam is applied to be more easily installed, the resultant bevelled edge 15 defined by the adhesive tape allowing said panels to slidably engage with other panels or structural members without snagging on initial edge-to-edge contact. Although not explicitly shown in the Figures, it is envisaged that the foam strip may comprise a chamfered edge 13a on either or both sides. Similarly, the foam strip may comprise other suitable cross-sectional or extrusion profiles, for example, a square, oblong or domed.

The foam material 13 comprises a visco elastic foam or other suitable expansible foam material. Such foam material will ideally have memory properties such that it may go from a pre-compressed state prior to application on the insulating panel or while the adhesive tape is rolled up, and will expand a predetermined amount once applied to said insulating panel. In this way, application of such an adhesive insulating tape provides an improved fit between adjacent insulating panels or joists or other members against which they abut, the foam being expansible to increase the width of the insulating panel or panels and the being compressible so that a snug, substantially airtight, fit between the edges of said panels or members is achieved when they are placed in juxtaposition.

As the tape is generally pliable it can be readily applied to irregularly shaped or poorly cut insulating panels or other irregular elements, the foldable portions of backing 11a, 11b further securing the foam strip and protecting it from shear forces as described previously. This functionality enables said panels to be quickly installed using an interference fit thereby obviating the need to use fasteners or devices which penetrate said panels during fitting or use.

The foam strip may also be provided with a suitable low-tack adhesive on its surface (i.e. the surface which contacts a panel or structural element in use) so that the tape can be adjustably placed into position along said panel or structural element to which it is to be affixed.

As shown in the figures, the tape 1 is further provided with a peel-off strip or strips of protective material 14 which cover the adhesive layer 12 or regions of the backing 11 which extend widthwise beyond the edges of the central elongate foam strip 13. While it is envisaged that each adhesive region on either side of the foam strip has its own peel-off strip, it is possible that a single peel-off strip which spans across the full width of the tape may be provided. A single strip of protective material would be particularly appropriate where the foam material is provided with its own adhesive layer (not shown in the figures) to augment the bond of the tape to an insulating panel member or structural member.

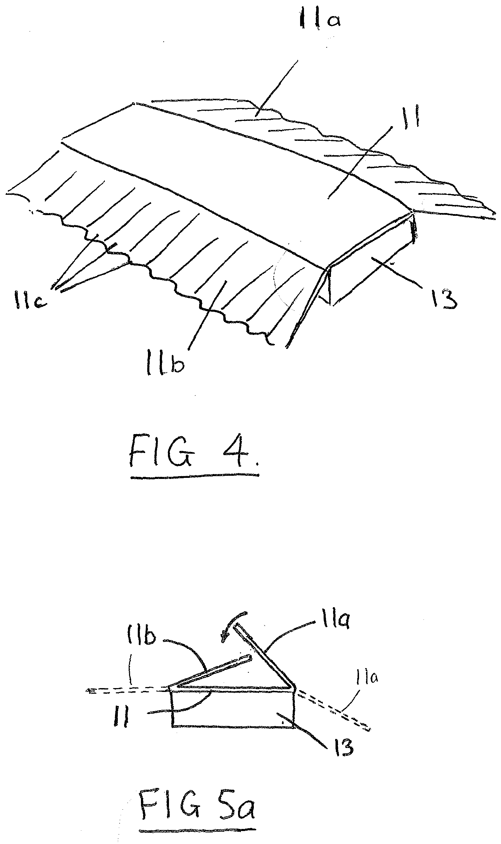

As shown in Figure 4, the foldable portions 11a, 11b of backing 11 which extend widthwise beyond the edges of the elongate strip of foam material 13 may be formed having flutes or frills 11c which enable the adhesive strip to be applied to bent, curved or irregularly profiled members, the flutes or frills enabling the tape to conform to the shape of said members without the backing buckling. Ideally, the flutes or frills are formed on the backing so that they stop short of the region where the foam strip 13 is provided so that the foldable portions 11a, 11b can be folded as intended. In this way, the flutes or frills do not extend upwardly beyond the planar extent of backing 11 in use.

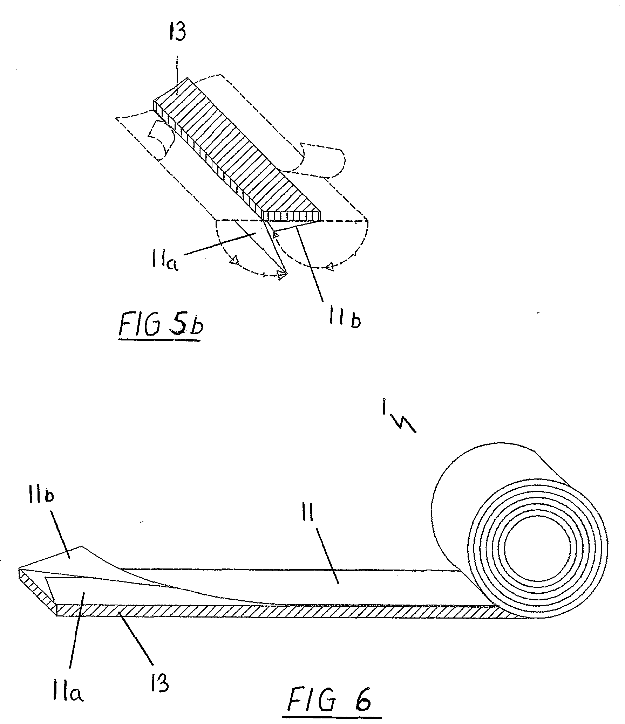

As shown in Figure 5a, 5b and Figure 6, the foldable portions 11a, 11b of backing 11 which extend widthwise beyond the edges of the elongate strip of foam material can be folded back upon themselves to facilitate the tape being formed into a narrower roll. In this way, the packing dimensions of a roll of the tape (Figure 6) in accordance with the invention can be reduced. Ideally, the width of a roll of tape will be substantially the same width of the foam strip. While the tape of the present invention has been particularly described with use between adjacent insulating panels or members, it is to be understood that the tape is also suitable for use in other applications where thermal or acoustic insulation, or where an improved fit or interface between adjacent members, is required. For example, the tape may be applied around the edges of a door or other closure member or indeed its complementary aperture or opening. Similarly, the tape could find application as a protective cushioning tape for the edges or surfaces of items or members. Furthermore, the term 'structural element' used throughout the foregoing description and in the appended claims is not intended to be limiting on any type of element, but encompasses any structure, such as, but limited to, walls, floors, boards, joists, ceilings, lintels, window frames etc.

## Claims

1. An adhesive gap sealing insulation tape (1) for sealing the gaps between the edges of adjacent panels or structural elements, the tape comprising a backing (11) having an adhesive layer (12) on one surface and an elongate strip of foam material (13) extending lengthwise along the adhesive layer,
wherein the elongate strip of foam material extending lengthwise along the adhesive layer is provided along a central portion of said adhesive layer such that the portions of backing (11a, 11b) which extend widthwise beyond the edges of the elongate strip of foam material are foldable to provide foldable flaps which extend beyond a depth of the strip of foam material, and which are adapted to overlap and adhere to the respective sides of the same panel or structural element in use, and to protect the foam material from shear forces during installation; and
wherein the elongate strip of foam material comprises a compressible and an expansible foam material able to expand a predetermined amount to provide a substantially airtight fit and an interference fit between the edges of said panels or structural elements when in juxtaposition.

2. An adhesive gap sealing tape as claimed in claim 1 wherein the tape is able to prevent draughts, prevent water ingress or to prevent heat loss.

3. An adhesive gap sealing tape as claimed in claim 1 wherein the tape is able to provide thermal insulation.

4. An adhesive gap sealing tape as claimed in any one of clams 1 to 3, wherein the foldable flaps are formed having flutes or frills.

5. An adhesive gap sealing tape as claimed in any one of claims 1 to 4, wherein the foldable flaps are provided with a peel-off strip or strips of protective material which cover the adhesive layer.

6. An adhesive gap sealing tape as claimed in any preceding claim, wherein the elongate strip of foam material is provided with a low tack adhesive on its surface so that the tape can be adjustably placed into position along a panel or structural element to which it is to be affixed.

7. An adhesive gap sealing tape as claimed in any preceding claim, wherein the elongate strip of foam material is provided with a chamfered edge on either or both sides.

8. An adhesive gap sealing tape as claimed in claim 1, wherein the foam material has shape memory properties.

9. An adhesive gap sealing tape as claimed in any preceding claim, wherein the backing comprises a metal foil.

10. An adhesive gap sealing tape as claimed in any one of claims 1 to 8, wherein the backing comprises a fabric material.

11. An adhesive gap sealing tape as claimed in any one of claims 1 to 9, wherein the backing comprises a gas impermeable material.

12. Use of an adhesive gap sealing tape as claimed in any preceding claim as an insulation tape.

13. Use of an adhesive gap sealing tape as claimed in any preceding claim as a protective cushioning tape.

## Patentansprüche

1. Ein Spaltdichtungs-Isolierklebeband (1) zum Dichten der Spalte zwischen den Kanten benachbarter Platten oder Bauelemente, wobei das Band ein Trägermaterial (11) mit einer Klebeschicht (12) auf einer Oberfläche und einen sich in Längsrichtung entlang der Klebeschicht erstreckenden langgestreckten Streifen aus Schaumstoff (13) beinhaltet,
wobei der sich in Längsrichtung entlang der Klebeschicht erstreckende langgestreckte Streifen aus Schaumstoff entlang eines mittleren Abschnitts der Klebeschicht bereitgestellt ist, sodass die Abschnitte aus Trägermaterial (11a, 11b), die sich in Breitenrichtung über die Kanten des langgestreckten Streifens aus Schaumstoff hinaus erstrecken, faltbar sind, um faltbare Laschen bereitzustellen, die sich über eine Tiefe des Streifens aus Schaumstoff hinaus erstrecken und die dazu angepasst sind, im Gebrauch die jeweiligen Seiten derselben Platte oder desselben Bauelements zu überlagern und daran zu haften und den Schaumstoff während der Installation vor Scherkräften zu schützen; und
wobei der langgestreckte Streifen aus Schaumstoff einen zusammendrückbaren und ausdehnungsfähigen Schaumstoff beinhaltet, der in der Lage ist, sich um ein vorgegebenes Maß auszudehnen, um eine im Wesentlichen luftdichte Passung und eine Presspassung zwischen den Kanten der Platten oder der Bauelemente bereitzustellen, wenn sie nebeneinander angeordnet sind.

2. Spaltdichtungsklebeband gemäß Anspruch 1, wobei das Band in der Lage ist, Zugluft zu verhindern, Eindringen von Wasser zu verhindern oder Wärmeverlust zu verhindern.

3. Spaltdichtungsklebeband gemäß Anspruch 1, wobei das Band in der Lage ist Wärmeisolierung bereitzustellen.

4. Spaltdichtungsklebeband gemäß einem der Ansprüche 1 bis 3, wobei die faltbaren Laschen Wellen oder Krausen aufweisend ausgebildet sind.

5. Spaltdichtungsklebeband gemäß einem der Ansprüche 1 bis 4, wobei die faltbaren Laschen mit einem oder mehreren Abziehstreifen aus Schutzmaterial, die die Klebeschicht abdecken, versehen sind.

6. Spaltdichtungsklebeband gemäß einem der vorangehenden Ansprüche, wobei der langgestreckte Streifen aus Schaumstoff mit einem schwach klebenden Klebstoff auf seiner Oberfläche versehen ist, sodass das Band entlang einer Platte oder eines Bauelements, an der bzw. dem es angebracht werden soll, zurechtrückbar in Position gebracht werden kann.

7. Spaltdichtungsklebeband gemäß einem der vorangehenden Ansprüche, wobei der langgestreckte Streifen aus Schaumstoff auf einer oder beiden Seiten mit einer abgeschrägten Kante versehen ist.

8. Spaltdichtungsklebeband gemäß Anspruch 1, wobei der Schaumstoff Formgedächtniseigenschaften aufweist.

9. Spaltdichtungsklebeband gemäß einem der vorhergehenden Ansprüche, wobei das Trägermaterial eine Metallfolie beinhaltet.

10. Spaltdichtungsklebeband gemäß einem der Ansprüche 1 bis 8, wobei das Trägermaterial einen Textilstoff beinhaltet.

11. Spaltdichtungsklebeband gemäß einem der Ansprüche 1 bis 9, wobei das Trägermaterial ein gasundurchlässiges Material beinhaltet.

12. Eine Verwendung eines Spaltdichtungsklebebands gemäß einem der vorangehenden Ansprüche als Isolierband.

13. Eine Verwendung eines Spaltdichtungsklebebands gemäß einem der vorangehenden Ansprüche als schützendes Polsterband.

## Revendications

1. Un ruban isolant adhésif d'étanchéité d'interstice (1) pour boucher de façon étanche les interstices entre les bords de panneaux ou d'éléments de structure adjacents, le ruban comprenant un support (11) ayant une couche adhésive (12) sur une surface et une bande allongée de matériau mousse (13) s'étendant dans le sens de la longueur le long de la couche adhésive,
dans lequel la bande allongée de matériau mousse s'étendant dans le sens de la longueur le long de la couche adhésive est fournie le long d'une portion centrale de ladite couche adhésive de telle sorte que les portions de support (11a, 11b) qui s'étendent dans le sens de la largeur au-delà des bords de la bande allongée de matériau mousse soient pliables pour fournir des rabats pliables qui s'étendent au-delà d'une profondeur de la bande de matériau mousse, et qui sont conçus pour chevaucher et adhérer aux côtés respectifs du même panneau ou élément de structure lors de l'utilisation, et pour protéger le matériau mousse des forces de cisaillement durant l'installation ; et
dans lequel la bande allongée de matériau mousse comprend un matériau mousse compressible et expansible apte à une expansion d'une quantité prédéterminée pour fournir un ajustement substantiellement étanche à l'air et un ajustement serré entre les bords desdits panneaux ou éléments de structure lorsqu'ils sont en juxtaposition.

2. Un ruban adhésif d'étanchéité d'interstice tel que revendiqué dans la revendication 1, le ruban étant apte à empêcher les courants d'air, à empêcher l'entrée d'eau ou à empêcher la perte de chaleur.

3. Un ruban adhésif d'étanchéité d'interstice tel que revendiqué dans la revendication 1, le ruban étant apte à fournir une isolation thermique.

4. Un ruban adhésif d'étanchéité d'interstice tel que revendiqué dans n'importe laquelle des revendications 1 à 3, dans lequel les rabats pliables sont formés en présentant des plissements ou des ondulations.

5. Un ruban adhésif d'étanchéité d'interstice tel que revendiqué dans n'importe laquelle des revendications 1 à 4, dans lequel les rabats pliables sont pourvus d'une bande ou de bandes pelables de matériau protecteur qui recouvrent la couche adhésive.

6. Un ruban adhésif d'étanchéité d'interstice tel que revendiqué dans n'importe quelle revendication précédente, dans lequel la bande allongée de matériau mousse est pourvue d'un adhésif à faible pégosité sur sa surface de sorte que le ruban puisse être placé en position de façon ajustable le long d'un panneau ou élément de structure auquel il est destiné à être fixé.

7. Un ruban adhésif d'étanchéité d'interstice tel que revendiqué dans n'importe quelle revendication précédente, dans lequel la bande allongée de matériau mousse est pourvue d'un bord chanfreiné sur l'un ou l'autre des côtés ou les deux côtés.

8. Un ruban adhésif d'étanchéité d'interstice tel que revendiqué dans la revendication 1, dans lequel le matériau mousse a des propriétés de mémoire de forme.

9. Un ruban adhésif d'étanchéité d'interstice tel que revendiqué dans n'importe quelle revendication précédente, dans lequel le support comprend une feuille métallique.

10. Un ruban adhésif d'étanchéité d'interstice tel que revendiqué dans n'importe laquelle des revendications 1 à 8, dans lequel le support comprend un matériau en tissu.

11. Un ruban adhésif d'étanchéité d'interstice tel que revendiqué dans n'importe laquelle des revendications 1 à 9, dans lequel le support comprend un matériau imperméable aux gaz.

12. Utilisation d'un ruban adhésif d'étanchéité d'interstice tel que revendiqué dans n'importe quelle revendication précédente comme ruban isolant.

13. Utilisation d'un ruban adhésif d'étanchéité d'interstice tel que revendiqué dans n'importe quelle revendication précédente comme ruban d'amortissement protecteur.
